# EUROPEAN PATENT SPECIFICATION

(11) **EP 2 578 090 B1**
(45) Date of publication and mention of the grant of the patent: **11.07.2018**
(21) Application number: 12171168.3
(22) Date of filing: 17.11.2006
(51) Int. Cl.: A21D 13/04, A21D 15/08, A23L 33/135, A21D 13/40, A21D 13/32, A21D 13/24

(54) **New probiotic strains**
Neue probiotische Stämme
Nouvelles souches probiotiques

(30) Priority: 17.11.2005 SE 0502527
(43) Date of publication of application: 10.04.2013
(62) Divisional of application: 06824558.8
(73) Proprietor: Celac Sweden AB, 223 70 Lund (SE)
(72) Inventor: Lönner, Clas, 243 96 Höör (SE)
(74) Representative: Bergenstråhle Group AB

(56) References cited:
- EP-A2- 1 010 372
- WO-A1-94/00019
- WO-A1-99/09839
- FR-A1- 2 812 794
- JP-A- 2006 149 299
- Deposit of microorganism 3R9 (DSM18788)
- Deposit of microorganism SP158 (DSM18789)

## Description

The present invention refers to specific viable probiotic bacteria, as well as a bread containing specific probiotic bacteria.

### THE BACKGROUND OF THE INVENTION

Probiotics, that is viable microorganisms having scientifically documented positive health effects in man or animals, are today present in above all different dairy products such as sour milk, yoghurt and milk, in different types of beverages and soups such as for instance juices, fruit beverages, rose hip soup and blueberry soup, and as a powder, tablets or capsules.

A common bread on the other hand does not contain any microorganisms but is in principal quite sterile when it comes out of the oven, wherein it has been subjected to high heat so that the crumb of the bread for a period of time has had a temperature just below 100°C. The bread is then allowed to cool, often on special cooling tracks and can then be subjected to recontamination by microorganisms on the surface of the bread. Said microorganisms, normally mould and yeast fungi, can subsequently, if the conditions are proper, grow and destroy the possibility of consumption of the bread. If bread is kept at ambient temperature the shelf life of the bread is in general about 10 to 14 days at the most.

Baking with sour dough is a very old method, above all involving advantages as to the elasticity of the bread dough in kneading and the ability to keep the carbon dioxide produced by the yeast, especially in rye dough, the aroma development in the bread dough and during the baking (for instance the Maillard reactions) and the shelf life of the baked bread as to fresh keeping and inhibitory effect on mould and yeast growth. To be able to prepare sour dough of a high and absolutely constant quality it is necessary to use a so called starter culture containing one or more well defined microorganisms. It is also necessary to prevent growth of the natural flora of microorganisms normally contained in the flour of the sour dough. The common process is then to mix the sour dough as an ingredient into the final bread dough before baking the bread in the oven, which result in all the sour dough bacteria being killed.

The problem with preparing bread containing a uniform distribution of probiotic bacteria is thus that if the bacteria are mixed into the bread dough before baking, they will be killed during the very baking process. In addition it is important that the content of probiotic bacteria in the bread is not substantially changed during the shelf life of the bread of about 10 days when stored at ambient temperature, which temperature can differ depending on the time of the year from normally about 15°C to about 30°C, or for a shorter period of time at temperatures up to 40-45°C. The last mentioned temperatures can for instance prevail during transport on warm summer days.

### PRIOR ART

WO 94/00019 discloses a baked product containing viable microorganisms and a method of preparing thereof. The actual microorganisms, yeast or bacteria, are said not to be able to propagate but rather to loose in viability during the period between preparation and consumption. In order to prepare a baked product having a desiderate number of microorganisms it is thus necessary to add said microorganisms to a higher content than what is desirable in the final baked product. Four different species, the strains of which have not been specified, have been used in the examples carried out.

Also DE 19943513 discloses the addition of Lactobacillus bacteria to bread or other bakery products, however without focusing or studying the viability of the bacteria in the bread upon storage. The bacteria are added in an aqueous medium. In FR2812794 probiotic bacteria are added to baked food products. The bacteria are added in oil in order to protect the bacteria.

WO 9909839 as well as EP 1010372 disclose the use of probiotic bacteria in bakery products but as separate filling compositions. The viability of bacteria in the separate fillings was good.

WO 0010395 discloses a live liquid sour dough with a long shelf life. The probiotic effect of the baked product is not addressed.

### DESCRIPTION OF THE INVENTION

The present invention relates to a probiotic strain of *Lactobacillus* selected from *Lactobacillus plantarum* 3R9 (DSM 18788), *Lactobacillus gasseri* SO121 (DSM 18790), *Lactobacillus plantarum* I7 (DSM 18787), and *Lactobacillus plantarum* SP158 (DSM 18789) and wherein said strain is isolated from a sour dough and has the ability to self-agglutinate. A *Lactobacillus* strain according to the present invention has the ability to grow in a liquid formulation based on cereals.

In one aspect of the invention, the *Lactobacillus* strain is selected from *Lactobacillus plantarum* 17 (DSM 18787), *Lactobacillus plantarum* 3R9 (DSM 18788) and *Lactobacillus plantarum* SP158 (DSM 18789).

In one aspect of the invention, the *Lactobacillus* strain is *Lactobacillus plantarum* 3R9 (DSM 18788).

In one aspect of the invention, the *Lactobacillus* strain is Lactobacillus *gasseri* SO121(DSM 18790).

In one aspect of the invention, the *Lactobacillus* strain is *Lactobacillus plantarum* 17 (DSM 18787).

In one aspect of the invention, the *Lactobacillus* strain is *Lactobacillus plantarum* SP158 (DSM 18789).

The invention is also directed to a probiotic bakery product comprising any of the previously described inventive *Lactobacillus* strains having a content of at least 1 x 10⁷CFU viable probiotic bacteria per g bread. The probiotic bakery product preferably is bread.

The *Lactobacillus* strains according to the invention can be included in a process for preparing bread containing viable probiotic bacteria, wherein
- a bread is baked and allowed to cool
- a liquid formulation of probiotic bacteria is added to the crumb of the bread via a liquid sour dough to a content of viable bacteria of at least 1 x 10⁶ CFU/g bread.

The *Lactobacillus* strains according to the invention especially can be included in process for preparing bread containing viable probiotic bacteria, wherein the probiotic bacteria are added to the crumb of the bread in an amount of at least 1 x 10⁷ CFU/g bread, especially at least 5 x 10⁷ CFU/g bread. CFU refers to colony forming units.

When adding probiotic bacteria to a bread there is a great risk that the number of bacteria decreases strongly and that the probiotic effect of the final bread will thus not appear. Instead, in order to adapt the probiotic bacterium to the environment in a crumb of a bread, the bacterium is first added to a dough in which optimal conditions are created for bringing about a growth of the bacterium at the same time as the pH value is declining. The sour dough is then added to the final bread. Having adapted the probiotic bacterium in this way to an environment wherein flour substantially is the nutriment for the bacterium, it was found that there will instead be a growth in the bread during the first time of the storage. This implies great economical advantages, as a considerably less amount of bacteria has to be added to the crumb compared to if the number of bacteria decreases, in which case a higher number of bacteria has to be added to the bread. In addition an active probiotic bacterium is considerably more effective than one that is not well and thus will need some time in the intestines of the person consuming the bread to repair the cells before functioning to 100 %.

An additional advantage of adding the bacteria via a sour dough is that the probiotic bacterium will then be adapted to an environment having a low pH value, below pH 4, which means that it will also have a better ability to survive during the passage from mouth to intestines, where the bacterium for instance passes the low pH of the stomach.

The liquid formulation in which the probiotic bacteria are added is a liquid sour dough. Such a sour dough mainly contains water, flour and probiotic bacteria to a number of at least 1x10⁷ CFU/g. The flour can for instance be flour from cereals, such as rye meal or rye flour, pure sifted rye flour, sifted bakery flour or wheat flour, whole wheat flour, barley flour, oat flour, corn flour etc. Probiotic sour dough is a sour dough which adds to a bread both a tastyness and a preserving effect due to its content of above all different acids and preferably lactic acid, and antibiotic substances such as for instance different bacteriocines. As the probiotic sour dough preferably is added to the bread after baking, the bread will, in addition to the tastyness and preserving effect, also be provided with viable probiotic bacteria, which in a decisive way distinguishes the effect of this sour dough from the effect of traditional sour dough. As an example of such a sour dough can be mentioned the viable sour dough product described in SE 515 569.

Bread refers in this context to all bakery products the main ingredients of which are cereals, for instance oats, barley, rye, wheat or corn, and which undergoes a refinement process normally comprising both a raising step with yeast or a chemical leavening agent and a heating step, baking in an oven. As examples of different products can be mentioned soft crumb bread, crisp bread (knäckebröd), tortillas, pizza bread, rusks, biscuits, muffins, white wheat bread and cakes.

When the bread has been baked, removed from the oven and cooled the probiotic liquid formulation is added. This can be done in several different ways depending on the actual type of bread. One way for soft crumble breads is to add the liquid probiotic formulation, at the same time as the bread is sliced, directly on to the slices of bread for instance via the "saw-blades" slicing the bread. This can for instance be done via small holes in the "saw-blade" or via a separate, similar means in a separate step directly after the slicing of the bread. Another way is to "inject" the probiotic formulation via needles or tubes of a small diameter. This can be done either via the long sides of the bread in which case the length of the needles should correspond to the breadth of the bread, or from one or both of the short sides of the bread. If it is done from the two short sides at the same time, the length of the needles/tubes should be somewhat longer than the length of half of the bread. It is then also of importance that the needles/tubes are located not to collide in the centre of the bread, but rather to be able to pass by each other for a short distance. If the "injection" takes place from just one short side of the bread the length of the needles/tubes should correspond to the length of the bread. In order to get a uniform distribution of the bacterial formulation in the bread it is of advantage if the formulation is added through more than one needle/tube. A suitable number of needles/tubes will be somewhere in between 10 and 30 on a surface of a section of the bread of 1 dm². Said techniques will give a homogenous distribution of the bacteria in the crumb of the bread and the slices of bread, respectively. A process is described, which is characterised in that the probiotic bacteria are added by injection either multifocally or continuously by means of needles.

After finished injection bread can preferably be stored for at least 12 hours, during which period the probiotic bacterium grows somewhat and is activated in the crumb of the bread. A bread prepared according to this process will then have a number of viable probiotic bacteria higher than 1x10⁷ CFU/g bread. After storing for 9 days at 25°C the number of viable bacteria is higher than 5x10⁶ CFU/g bread. The use of bacteria having the ability to grow and produce acids in a dough system, in which the flour can be wheat, rye, barley, corn, sorghum as well as oats, is described. For certain bacteria, for instance propionic acid bacteria, a specific carbon source has to be added to the dough for an effective growth to be obtained. In the case of for instance propionic acid bacteria about 2 % by weight of L-lactate (based on the content of flour) is added to the dough recipe. Depending on the bacterial strain, the properties of the flour and optional additives, the number of bacteria in the sour dough after the fermentation step will be in between 1x10⁸ and 2x10⁹ CFU/g.

The selection of bacterium is of great importance for obtaining an effective probiotic effect of the bread. It is required that the bacterium has the ability to survive in a bread crumb and then preferably also to grow in a sour dough, and in addition it is of great importance that the probiotic bacterium has the ability to adhere to surfaces and preferably to the mucous membrane of the intestines. One possibility to investigate this characteristic in the selected bacterium is to look at its ability of self-agglutination and adhesion to cells of baker's yeast. In a study by Adlerbert, I., Ahrné, S., Johansson, M.-L., Molin, G., Hansson, L.-Å., and Wold, A. 1996, A mannose-specific adherence Mechanism in Lactobacillus plantarum conferring binding to the human colonic cell line HT-29; Applied and Environmental Microbiology 62:2244-2251, it was shown that the ability to adhere to a cell of bakery yeast in a mannose-specific way correlates to the ability of the bacterium to adhere to human colonic cells (HT-29) via mannose-specific receptors. Such a characteristic is of course very interesting when it comes to the possibilities of the probiotic bacterium to compete with all the other intestinal bacteria present.

The new bacteria *Lactobacillus plantarum* 17, 3R9, and SP158, as well as *L*. *gasseri* SO121 all have been isolated from different types of sour dough. Strain 17 is isolated from an Icelandic industrial sour dough, the strains 3R9 and SO121 from two different Swedish industrial sour doughs, and strain SP158 from a spontaneously started wheat sour dough at a laboratory. The strains have been isolated on the substrate MRS supplemented with 1 % yeast extract and 2 % maltose, except for SP158 where the substrate was solely MRS. The strains have been characterised as to ability to ferment different carbon sources by means of API 50 trays and API CHL medium (API system, Montalieu Vercieu, France) and on RAPD (Randomly Amplified Polymorphic DNA), giving an "artificial fingerprint" of the genome of the bacterium. The isolates have been isolated three times before being tested on API and RAPD and the results showed that the four strains differed from the type strains of the respective bacterial species. The bacterial strains have been deposited at the Deutsche Sammlung von Mikroorganismen und Zellkulturen GmbH, on November 16, 2006 and been given the following accession numbers: *Lactobacillus plantarum* 17 (DSM 18787); *Lactobacillus plantarum* 3R9 (DSM 18788); *Lactobacillus plantarum* SP158 (DSM 18789); and *Lactobacillus gasseri* SO121 (DSM 18790).

Plasmid DNA was prepared according to Anderson, D., G., and McKay, L. L. (Simple and rapid method for isolating large plasmid DNA from lactic streptococci. Applied and Environmental Microbiology, 1983; 46: 549-552).

The plasmids were separated by electrophoresis on a 0.7 % agarose gel in Tris-borate buffer. DNA was then visualised by UV light after staining with ethidium bromide and the gel was photographed. The distance that DNA had moved on the gel was measured directly from the photo of the gel. As reference strain was used *Escherichia coli* V517 (Plasmid reference Center, Stanford, California, USA).

The results showed *inter alia* differences between *L. plantarum* 299 (DSM 6595) and 299v (DSM 9843), having the same plasmid pattern, and the other strains of *L. plantarum* as to plasmid patterns. Certain plasmid sizes were found in all strains, other plasmids, however, were unique for the respective strain.

A process for preparing bread can be performed containing viable probiotic bacteria, wherein the probiotic bacteria are one or more of the following strains: *Lactobacillus plantarum* I7 (DSM 18787);
*Lactobacillus plantarum* SP158 (DSM 18789);
*Lactobacillus plantarum* 3R9 (DSM 18788);
*Lactobacillus gasseri* SO121 (DSM 18790).

The probiotic bacteria should be added to the bread crumb in an amount giving a probiotically active amount of bacteria when ingesting the bread. An intake per day of 10⁹ CFU probiotic bacteria can be sufficient to provide a positive effect in the intestinal flora, but often it is desirable with an amount being one or a few powers of ten higher. A daily delivery of 1-5x10¹⁰ bacteria is normally used to give the desired effect. The delivered amount of bacteria of course also depends on the ability of the respective strain to survive the passage from mouth to intestines and its ability to remain in the intestinal system. If the strain is able to adhere to intestinal cells the positive effect will increase. 2-3 slices of bread per day correspond for instance to 80-120 g bread, which should give an intake of at least 10⁹ CFU/d.

### EXAMPLES

### Example 1. Test of the activity of different bacteria in a water solution based on cereals

To find out if a bacterial strain has the ability to grow well and propagate, as well as to decrease the pH value in a dough, different bacterial strains were tested in a so called activity test. 225 g of water was mixed with 150 g of rye flour and the actual bacterial strain in an amount of 1x10⁷ CFU/g dough. The time that lapsed until pH had decreased to 4.0 was measured, as well as the pH value, the acid equivalent (S°, ml 0.1 N NaOH required to give a pH of 8.50 in a solution consisting of 10 g of dough and 90 g distilled water) and the number of viable bacteria in the mature sour dough CFU/g. The time of fermentation was 20 h and the fermentation temperature 30°C or what was optimal for the added starter culture. The result is presented in the table below.

**Table 1**

| Bacterial strain | Time to pH=4.0 (h) | pH, 20 h | S°, 20 h | CFU/g, 20 h |
|---|---|---|---|---|
| *L. acidophilus* PT24 | 18.5 | 4.2 | 10.6 | 3·10⁸ |
| *L. brevis* A6 | 12.0 | 3.6 | 16.1 | 2·10⁹ |
| *L. gasseri* SO121 | 10.5 | 3.5 | 21.5 | 5·10⁸ |
| *L. plantarum* 17 | 10.0 | 3.6 | 14.5 | 9·10⁸ |
| *L. plantarum* I11 | 9.5 | 3.5 | 14.8 | 8·10⁸ |
| *L. plantarum* SP158 | 9.5 | 3.5 | 15.5 | 1·10⁹ |
| *L. plantarum* 3R9 | 9.0 | 3.5 | 14.7 | 1·10⁹ |
| *L. plantarum* 299v | 10.5 | 3.5 | 15.1 | 2·10⁹ |
| *L. rhamnosus 271* | 13.0 | 3.6 | 13.7 | 1·10⁹ |
| *Lactococcus lactis* | > 20 | 5.2 | 4.8 | < 1·10⁷ |

The results show that not all strains of so called lactic acid bacteria have the ability to grow well in a dough containing but water and flour.

### Example 2. Test of the agglutinative ability of different bacteria

Certain bacterial strains have the ability to adhere to different types of surfaces. It could be a surface of glass or to the cell surface of the same bacterial strain as itself, self-agglutination, or to a baker's yeast cell of the species *Saccharomyces cerevisiae.*

The property to self agglutinate means that the bacterium has a greater ability to be able to form biofilms. This is of great interest when it comes to the survival of the bacterium and its growth in the final bread, which becomes much better. The biofilm is a kind of protective mechanism for the bacterium and bacteria easily form such a one around structures such as for instance fibres in the sour dough and the crumb of bread. This also implies that the bacteria are more protected during the passage from the mouth down through the stomach to the intestines and that a greater number with high activity reaches the final destination in the intestines.

As a test of the above characteristics and of the ability to bind mannose-specific to baker's yeast the method described by Adlerbert *et al.* (1996) was used. Bacteria having this characteristic have turned out to bind to mannose-specific receptors on the human intestinal mucosal membrane.

The assay involves mixing a drop containing baker's yeast dissolved in PBS solution (phosphate buffered saline solution) with another drop containing the bacterial culture dissolved into PBS solution on a microscope slide. The slide is then waddled back and forth and the number of turnings required to visualise a fine granular precipitate recorded. If no precipitate is visible after about 25-30 turnings the bacterial culture is deemed to be non yeast agglutinating. A similar test is then performed in which a drop of bacterial solution is mixed with a drop containing both baker's yeast and D-mannose and at the same time a drop of the bacterial solution is mixed with a drop only containing baker's yeast. To verify a mannose-inhibited agglutination an optional agglutination should take place after more than at least 10 turnings when mannose is added compared to agglutination without mannose.

**Table 2**

| Bacterial strain | Self-agglutin. | Binds to yeast cell | Binds mannos-spec. to yeast cell |
|---|---|---|---|
| *L. acidophilus* | no | no | no |
| *L. brevis* A6 | no | no | no |
| *L. gasseri* SO121 | yes | no | no |
| *L. plantarum* 17 | yes | no | no |
| *L. plantarum* I11 | no | no | no |
| *L. plantarum* SP158 | yes | yes | yes |
| *L. plantarum* 3R9 | yes | no | no |
| *L. plantarum* 299 | yes | yes | yes |
| *L. plantarum* 299v | yes | yes | yes |
| *L. rhamnosus 271* | no | no | no |
| *Lactococcus lactis* | no | no | no |

The results show that only certain bacterial strains have the ability to adhere to surfaces. The invention especially refers to the use of bacteria having the ability of self-agglutination and/or binding to yeast cells and/or bindning to yeast cells in a mannose-specific way.

### Example 3. Preparation of probiotic bread with Lactobacillus plantarum 299v (not part of the invention)

Sour dough is prepared using the probiotic starter culture *L. plantarum* 299v (DSM 9843), wherein a mixture of water, sifted bakery flour and an enzyme mixture (San Super 240 L (Novo Nordisk A/S, Bagsvaerd, Denmark)) is blended and heated in two steps to about 90°C. After a holding time of 60 minutes the mixture is cooled to 37°C before adding the starter culture. A fermentation process of 20 hours will then take place before the sour dough is cooled to about 4°C. The pH value of the sour dough at the time of injection is 3.4 and the acid equivavlent 14.7 (ml 0.1 N NaOH/10 g sour dough) and the number of viable bacteria 2x10⁸ CFU/g. Bread is baked of the type "rye bread" and sliced. Then about 18 ml sour dough is injected into the bread. After 20 hours the viable count is about 7x10⁷ CFU/g bread and after storage for nine days at ambient temperature (about 22-25°C) about 3x10⁸ CFU/g bread.

### Example 4. Preparation of probiotic bread with Lactobacillus rhamnosus 271 (not part of the invention)

Sour dough is prepared using the probiotic starter culture *L. rhamnosus 271* (DSM 6594), wherein a mixture of water, rye flour and an enzyme mixture (San Super 240 L (Novo Nordisk A/S, Bagsvaerd, Denmark)) is blended and heated in two steps to about 90°C. After a holding time of 60 minutes the mixture is cooled to 37°C before adding the starter culture. A fermentation process of 20 hours will then take place before the sour dough is cooled to about 4°C. The pH value of the sour dough at the time of injection is 3.4 and the acid equivavlent 12.5 (ml 0.1 N NaOH/10 g sour dough) and the number of viable bacteria 2x10⁹ CFU/g. Bread is baked of the type "whole-meal bread". Then about 30 ml sour dough is injected into the bread. After 24 hours the viable count is about 3x10⁸ CFU/g bread and after storage for seven days at ambient temperature (about 22-25°C) about 6x10⁸ CFU/g bread.

### Example 5: Preparation of probiotic bread with Lactobacillus plantarum SP158

Sour dough is prepared using the probiotic starter culture *L. plantarum* SP158 /DSM 18789), wherein a mixture of water, sifted rye flour and an enzyme mixture (San Super 240 L (Novo Nordisk A/S, Bagsvaerd, Denmark)) is blended and heated in two steps to about 90°C. After a holding time of 60 minutes the mixture is cooled to 37°C before adding the starter culture. A fermentation process of 20 hours will then take place before the sour dough is cooled to about 4°C. The pH value of the sour dough at the time of injection is 3.4 and the acid equivalent 13.9 (ml 0.1 N NaOH/10 g sour dough) and the number of viable bacteria 1x10⁹ CFU/g. Bread is baked of the type "sifted rye bread". Then about 20 ml sour dough is injected into the bread. After 24 hours the viable count is about 1x10⁸ CFU/g bread and after storage for seven days at ambient temperature (about 22-25°C) about 3x10⁸ CFU/g bread.

### CLINICAL TRIAL (not part of the invention)

A clinical trial was performed aiming at studying the colonisation of the bacterium *L. plantarum* 299v in human intestines by studying the presence thereof in faeces after ingestion of the bacterium via a sour dough bread prepared in accordance with Example 3. 32 healthy men an women at the age of between 18 and 65 years took part in the study. The test product was a bread containing wheat, water, rye, syrup, yeast, sour dough from rye and wheat, fat, amylases and viable *L. plantarum* 299v. The daily intake was 120 g (3 slices) containing in total 1-2x10¹⁰ CFU/day. The sliced bread was ingested in the morning and evening. During the test period the test persons were not allowed to eat other products containing probiotic bacteria. The average intake of *L. plantarum* 299v was 2.3x10¹⁰ per day. The total studying period was 5 weeks, during which the first period of 2 weeks did not comprise any consumption of the bread, the following 2 weeks involved that the test persons ingested three slices of bread per day (three slices). The final week involved no consumption of bread. The study was accepted by the ethical committee at the faculty of medicine at the university of Lund.

The faeces samples were analysed as to the content of lactobacilli (Rogosa agar, anaerobic, 3 days at 37°C) and *L. plantarum* 299v was identified by RAPD (Randomly Amplified Polymorphic DNA) according to Johansson et al., Lett. Appl. Microbiol. 1995;21:155-159. The results of the assay are stated in Table 3 below.

**Table 3. log₁₀ cfu/g in faeces at start and after ingestion of bread for two weeks (n=32) (median (min-max)). Comparison with before administration within the group**

| | Before ingestion | After ingestion for 2 weeks | 1 week after finished ingestion |
|---|---|---|---|
| *Lactobacillus plantarum* 299v Test product | < 3.0 | 7.5 *** (4.6-8.8) | <3.0 (<3.0^{a} -7.1) |
| Lactobacilli total amount | 6.8 (<3.0^{b}-8.2) | 7.6*** (5.3-8.8) | 6.9 (3.6-9.5) |
| Test product | | | |

| | | | |
|---|---|---|---|
| ^{a} 24 of 32 < 3.0 ^{b} 1 of 32 < 3.0 Wilcoxon sign rank test (*p<0.05, **p<0.01, ***p<0.001). | | | |

A significant increase of the total number of lactobacilli and *L*. *plantarum* 299v was observed after ingestion of the bread for two weeks and the result is comparable to the result from other studies wherein the same number of *L. plantarum* 299v has been administered (Johansson et al., Int. J. Food Microiol. 42:29-38; Nobaek et al., Am. J. Gastroenterol. 95:1231-1238).

## Claims

1. A probiotic strain of *Lactobacillus* selected from *Lactobacillus plantarum* 3R9 (DSM 18788), *Lactobacillus gasseri* SO121 (DSM 18790), *Lactobacillus plantarum* I7 (DSM 18787), and *Lactobacillus plantarum* SP158 (DSM 18789) and wherein said strain is isolated from a sour dough and has the ability to self-agglutinate.

2. The *Lactobacillus* strain according to claim 1 selected from *Lactobacillus plantarum* I7 (DSM 18787), *Lactobacillus plantarum* 3R9 (DSM 18788) and *Lactobacillus plantarum* SP158 (DSM 18789).

3. The *Lactobacillus* strain according to any one of claims 1-2, wherein said strain is *Lactobacillus plantarum* 3R9 (DSM 18788).

4. The Lactobacillus strain according claim 1, wherein said strain is *Lactobacillus gasseri* SO121 (DSM 18790).

5. The Lactobacillus strain according to any one of claims 1-2, wherein said strain is *Lactobacillus plantarum* I7 (DSM 18787).

6. The Lactobacillus strain according to any one of claims 1-2, wherein said strain is *Lactobacillus plantarum* SP158 (DSM 18789).

7. The *Lactobacillus* strain according to any one of the preceding claims, wherein said strain has the ability to grow in a liquid formulation based on cereals.

8. A probiotic bakery product comprising a *Lactobacillus* strain according to any one of the preceding claims **characterised in** a content of at least 1 x 10⁷CFU viable probiotic bacteria per g bread.

9. The probiotic bakery product according to claim 8, wherein the bakery product is bread.

## Patentansprüche

1. Probiotischer Stamm von *Lactobacillus,* ausgewählt aus *Lactobacillus plantarum* 3R9 (DSM 18788), *Lactobacillus gasseri* SO121 (DSM 18790), *Lactobacillus plantarum* I7 (DSM 18787) und *Lactobacillus plantarum* SP158 (DSM 18789) und wobei der Stamm aus einem Sauerteig isoliert wird und die Fähigkeit zum Selbst-Agglutinieren aufweist.

2. *Lactobacillus-Stamm* nach Anspruch 1, ausgewählt aus *Lactobacillus plantarum* I7 (DSM 18787), *Lactobacillus plantarum* 3R9 (DSM 18788) und *Lactobacillus plantarum* SP158 (DSM 18789).

3. *Lactobacillus-Stamm* nach einem der Ansprüche 1-2, wobei der Stamm *Lactobacillus plantarum* 3R9 (DSM 18788) ist.

4. Lactobacillus-Stamm nach Anspruch 1, wobei der Stamm *Lactobacillus gasseri* SO121 (DSM 18790) ist.

5. Lactobacillus-Stamm nach einem der Ansprüche 1-2, wobei der Stamm *Lactobacillus plantarum* I7 (DSM 18787) ist.

6. Lactobacillus-Stamm nach einem der Ansprüche 1-2, wobei der Stamm *Lactobacillus plantarum* SP158 (DSM 18789) ist.

7. *Lactobacillus-Stamm* nach einem der vorstehenden Ansprüche, wobei der Stamm die Fähigkeit zum Wachsen in einer auf Getreide basierenden flüssigen Formulierung aufweist.

8. Probiotische Backware, umfassend einen *Lactobacillus-Stamm* nach einem der vorstehenden Ansprüche, **gekennzeichnet durch** einen Gehalt von mindestens 1 x 10⁷ CFU lebensfähigen probiotischen Bakterien pro g Brot.

9. Probiotische Backware nach Anspruch 8, wobei die Backware Brot ist.

## Revendications

1. Souche probiotique de *Lactobacillus* sélectionnée parmi *Lactobacillus plantarum* 3R9 (DSM18788), *Lactobacillus gasseri* SO121 (DSM18790), *Lactobacillus plantarum* I7 (DSM18787), et *Lactobacillus plantarum* SP158 (DSM18789) et dans laquelle ladite souche est isolée d'une pâte aigre et a la capacité de s'auto-agglutiner.

2. Souche de Lactobacillus selon la revendication 1, sélectionnée parmi *Lactobacillus plantarum* I7 (DSM18787), *Lactobacillus plantarum* 3R9 (DSM18788) et *Lactobacillus plantarum* SP158 (DSM18789).

3. Souche de Lactobacillus selon l'une quelconque des revendications 1-2, dans laquelle ladite souche est *Lactobacillus plantarum* 3R9 (DSM18788).

4. Souche de *Lactobacillus* selon la revendication 1, dans laquelle ladite souche est *Lactobacillus gasseri* SO121 (DSM18790).

5. Souche de *Lactobacillus* selon l'une quelconque des revendications 1-2, dans laquelle ladite souche est *Lactobacillus plantarum* I7 (DSM18787).

6. Souche de *Lactobacillus* selon l'une quelconque des revendications 1-2, dans laquelle ladite souche est *Lactobacillus plantarum* SP158(DSM18789).

7. Souche de *Lactobacillus* selon l'une quelconque des revendications précédentes, dans laquelle ladite souche a la capacité de croître dans une formulation liquide à base de céréales.

8. Produit de boulangerie probiotique comprenant une souche de *Lactobacillus* selon l'une quelconque des revendications précédentes, **caractérisée par** une quantité d'au moins 1 x 10⁷ UFC de bactéries probiotiques viables par g de pain.

9. Produit de boulangerie probiotique selon la revendication 8, dans lequel le produit de boulangerie est le pain.
